# EUROPEAN PATENT SPECIFICATION

(11) **EP 3 777 369 B1**
(45) Date of publication and mention of the grant of the patent: **02.08.2023**
(21) Application number: 19720203.9
(22) Date of filing: 05.04.2019
(51) Int. Cl.: H04W 56/00

(54) **A WIRELESS DEVICE, A NETWORK NODE AND METHODS THEREIN FOR TRANSMISSION OF SYNCHRONIZATION SIGNALS**
DRAHTLOSVORRICHTUNG, NETZWERKKNOTEN UND VERFAHREN DARIN ZUR ÜBERTRAGUNG VON SYNCHRONISATIONSSIGNALEN
DISPOSITIF SANS FIL, NOEUD DE RÉSEAU ET PROCÉDÉS ASSOCIÉS DE TRANSMISSION DE SIGNAUX DE SYNCHRONISATION

(30) Priority: 06.04.2018 US 201862653606 P
(43) Date of publication of application: 17.02.2021
(73) Proprietor: Telefonaktiebolaget LM Ericsson (publ), 164 83 Stockholm (SE)
(72) Inventor: BELLESCHI, Marco, 17155 Solna (SE); ASHRAF, Shehzad Ali, 52064 Aachen (DE); BLASCO SERRANO, Ricardo, 02260 Espoo (FI)
(74) Representative: Ericsson
(86) International application number: PCT/SE2019/050315
(87) International publication number: WO 2019/194739

(56) References cited:
- CATT: "Discussion on synchronization for carrier aggregation in V2X Phase 2", 3GPP DRAFT; R1-1801702, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20180226 - 20180302 17 February 2018 (2018-02-17), XP051397684, Retrieved from the Internet: URL:http://www.3gpp.org/ftp/tsg%5Fran/WG1% 5FRL1/TSGR1%5F92/Docs/ [retrieved on 2018-02-17]
- NOKIA ET AL: "Discussion on synchronization for SL CA", 3GPP DRAFT; R1-1802580_V2X_SYNCHRONIZATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20180226 - 20180302 17 February 2018 (2018-02-17), XP051398020, Retrieved from the Internet: URL:http://www.3gpp.org/ftp/tsg%5Fran/WG1% 5FRL1/TSGR1%5F92/Docs/ [retrieved on 2018-02-17]

## Description

### TECHNICAL FIELD

Embodiments herein relate to a wireless device, a network node and to methods therein. In some aspects, they relate to transmission of a synchronization signal to another wireless device.

### BACKGROUND

In a typical wireless communication network, wireless devices, also known as wireless communication devices, mobile stations, stations (STA) and/or User Equipments (UEs), communicate via a Local Area Network such as a WiFi network or a Radio Access Network (RAN) to one or more Core Networks (CN). The RAN covers a geographical area which is divided into service areas or cell areas, which may also be referred to as a beam or a beam group, with each service area or cell area being served by a radio network node such as a radio access node e.g., a Wi-Fi access point or a radio base station (RBS), which in some networks may also be denoted, for example, a NodeB, eNodeB (eNB), or gNB as denoted in 5G. A service area or cell area is a geographical area where radio coverage is provided by the radio network node. The radio network node communicates over an air interface operating on radio frequencies with the wireless device within range of the radio network node.

Specifications for the Evolved Packet System (EPS), also called a Fourth Generation (4G) network, have been completed within the 3rd Generation Partnership Project (3GPP) and this work continues in the coming 3GPP releases, for example to specify a Fifth Generation (5G) network also referred to as 5G New Radio (NR). The EPS comprises the Evolved Universal Terrestrial Radio Access Network (E-UTRAN), also known as the Long Term Evolution (LTE) radio access network, and the Evolved Packet Core (EPC), also known as System Architecture Evolution (SAE) core network. E-UTRAN/LTE is a variant of a 3GPP radio access network wherein the radio network nodes are directly connected to the EPC core network rather than to RNCs used in 3G networks. In general, in E-UTRAN/LTE the functions of a 3G RNC are distributed between the radio network nodes, e.g. eNodeBs in LTE, and the core network. As such, the RAN of an EPS has an essentially "flat" architecture comprising radio network nodes connected directly to one or more core networks, i.e. they are not connected to RNCs. To compensate for that, the E-UTRAN specification defines a direct interface between the radio network nodes, this interface being denoted the X2 interface.

Multi-antenna techniques can significantly increase the data rates and reliability of a wireless communication system. The performance is in particular improved if both the transmitter and the receiver are equipped with multiple antennas, which results in a Multiple-Input Multiple-Output (MIMO) communication channel. Such systems and/or related techniques are commonly referred to as MIMO.

In addition to faster peak Internet connection speeds, 5G planning aims at higher capacity than current 4G, allowing higher number of mobile broadband users per area unit, and allowing consumption of higher or unlimited data quantities in gigabyte per month and user. This would make it feasible for a large portion of the population to stream high-definition media many hours per day with their mobile devices, when out of reach of Wi-Fi hotspots. 5G research and development also aims at improved support of machine to machine communication, also known as the Internet of things, aiming at lower cost, lower battery consumption and lower latency than 4G equipment.

In Release 14, support for Vehicle-to-everything (V2X) communications was introduced to the LTE specification. The V2X is a collective term which includes any combination of direct communication between vehicles, pedestrians and infrastructure. V2X communication may take advantage of a network (NW) infrastructure, when available, but at least basic V2X connectivity should be possible even in case of lack of network coverage. Providing an LTE-based V2X interface may be economically advantageous because of the LTE economies of scale and it may enable tighter integration between communications with the NW infrastructure, e.g. by Vehicle-to-Infrastructure (V2I) communications, and Vehicle-to-Pedestrian (V2P) communications and Vehicle-to-Vehicle (V2V) communications, as compared to using a dedicated V2X technology.

V2X communications may carry both non-safety information and safety information, where each of the applications and services may be associated with specific requirements sets, e.g., in terms of latency, reliability, capacity, etc.

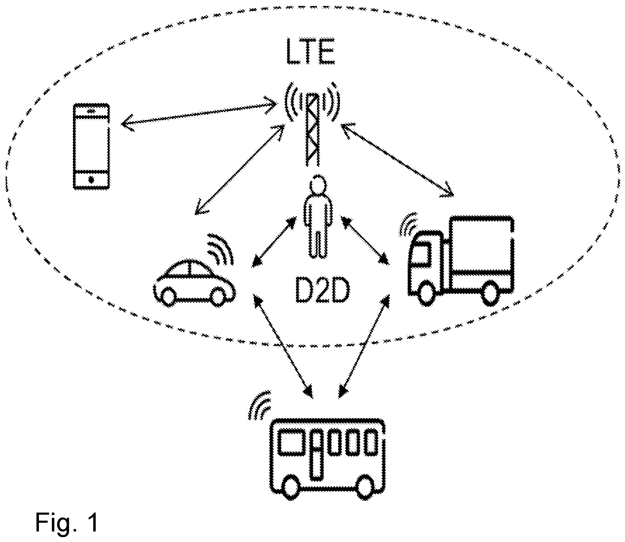

**Figure 1** schematically illustrates V2X scenarios for an LTE-based NW, wherein Device-to-Device (D2D) communications is exemplified between wireless devices of a user and a car, between wireless devices of the user and a truck, between wireless devices of the car and a bus, and between wireless devices of the truck and the bus.

### Carrier aggregation

The 3GPP is discussing enhancements to the LTE V2X functionalities firstly introduced in Release 14. One such enhancement is the Carrier Aggregation (CA) functionality, which consists of performing simultaneous transmissions over multiple carriers. By using CA, it is possible to transmit larger packets, achieve larger transmission rates (in bits per second), or increase the reliability of the communications system, e.g., by transmitting the same packet over multiple carriers. The transmissions over multiple carriers may take place at the same point in time or at different points in time (usually separated by a few milliseconds).

In telecommunications, a carrier is a waveform, usually sinusoidal, that is modulated (e.g. modified) with an input signal for the purpose of conveying information. The terms carrier, carrier wave and carrier signal may be used interchangeably.

### Synchronization procedure

In Release 15, a wireless device capable of V2X sidelink (SL) communication should follow certain rules to determine whether or not to transmit SL Synchronization Signals (SLSS), and SL MIB (Master Information Block). Such rules depend on certain parameters that may be configured by the communications network or preconfigured. Further, such rules may depend on the wireless device's status, i.e. on whether the wireless device is in an RRC connected mode, in an idle mode, in in-coverage, or in out-of-coverage. By the expression "V2X sidelink communication" when used in this disclosure is meant communication between a wireless device of a vehicle and another wireless device which another device is not a radio network node, such as an eNB or a base station.

For example, for a wireless device in an RRC connected mode, the network, e.g. a network node such as an eNB, may indicate a parameter such as a network controlled synchronization transmit parameter networkControlledSyncTx, which indicates whether the wireless device shall transmit an SLSS and an SL MIB on the SL frequency(ies), i.e. the SL carrier frequency or the SL carrier frequencies, or not.

On the other hand, if the wireless device is in an idle mode, the network may also indicate a threshold on the RSRP measurements, so that if the RSRP measured from the cell in which the wireless device is camping is below such threshold, the wireless device shall transmit the SLSS and the SL MIB. This is because the wireless device may be at

the cell edge, and there might be other wireless devices in the surrounding which are located out-of-coverage of the serving eNB and which may benefit from the SLSS forwarded by wireless devices located in-coverage of the serving eNB.

Similarly, for out-of-coverage wireless devices, there is another RSRP threshold which should be used when the wireless device measures a Sidelink Reference Signal Received Power (S-RSRP) over the sidelink from other wireless devices operating in the surroundings. The S-RSRP is defined in the 3GPP standard document TS 36.214. If the S-RSRP is below such threshold the wireless device shall transmit the SLSS, otherwise it should not transmit the SLSS, i.e. it is assumed that there are other wireless devices in the surrounding providing the SLSS with good radio quality.

For CA, the 3GPP has recently agreed on the framework for CA synchronization. According to which, a set of carriers may be aggregated only when they are synchronized in time.

CATT: "Discussion on synchronization for carrier aggregation in V2X Phase 2", 3GPP DRAFT; R1-181702 and NOKIA ET AL: "Discussion on synchronization for SL CA", 3GPP DRAFT; RI-1802580_V2X_SYNCHRONIZATION both disclose configuring of carriers in a wireless device for use when transmitting sidelink synchronization signals (SLSS).

### SUMMARY

In this disclosure, "transmission of SLSS" or "SLSS transmission" usually refers to transmission of SLSS and SL MIB. Further, in this disclosure the terms "SLSS", "SLSS transmission" and "synchronization signal" are used interchangeably.

As a part of developing embodiments herein, a problem will first be identified and discussed.

For the SLSS transmission in case of CA, there are two possible scenarios.

According to a first scenario, the SLSS is transmitted on all aggregated carriers following the legacy Rel. 14 procedure.

According to a second scenario, the SLSS is transmitted on only one carrier out of the aggregated carriers which one carrier here is referred to as a synchronization carrier.

A problem with the first scenario is that a UE is power limited which results in reduction in transmission power of each of the synchronization signals i.e. the SLSS, transmitted simultaneously. In addition to that, simultaneous transmission on non-contiguous resources may also cause increase in Maximum Power Reduction (MPR) due to inter-modulation products etc. One solution to keep the same transmission power is to transmit the SLSS of each carrier in different time i.e. in different subframes.

But such approach leads to half-duplex issue and reduces the number of available radio resources, which may impact the performance of the communications system.

A problem with the second scenario is that since the SLSS is transmitted only on the synchronization carrier, the rest of the carriers lack a synchronization reference, which creates a problem with legacy wireless devices. Namely, Release 14 wireless devices that are operating in one of the carriers may not receive the SLSS and they might have a different interpretation of timing. This problem will be severe when the carrier is (preconfigured to have the eNB as the highest priority for synchronization reference because out-of-coverage wireless devices have no other means to acquire the correct synchronization reference than through the SLSS as opposed to the case where the synchronization reference may be directly derived from Global Navigation Satellite System (GNSS) signals.

In addition to the above configuration for CA, it is important that the wireless device, only performing single carrier transmission, always transmits the SLSS according to the legacy procedure specified in Rel. 14.

However, there is no current, i.e. Rel 14 LTE, signaling procedure that can limit the transmissions of synchronization signals, i.e. the SLSS transmitted on the Physical Sidelink Broadcast CHannel (PSBCH), on a single carrier or on some carriers in case of CA. Moreover, it is desirable that the conditions for transmitting synchronization signals on a carrier may be different in case of CA and single carrier transmission, i.e. in case of non-CA.

An object of embodiments herein is therefore to improve the performance of a wireless communications network.

Embodiments of the invention are outlined in the appended independent claims. Further detailed embodiments are given in the dependent claims.

Since the wireless device receives, from the network node, a message indicating whether or not a carrier is to be used for transmitting a synchronization signal to the second wireless device, and since the first wireless device transmits the synchronization signal to the second wireless device on a carrier indicated by the received message, the network node controls which carrier to be used for transmitting the synchronization signal. Thereby, the number of transmissions of synchronization signals on a single carrier or on some carriers in case of carrier aggregation can be limited. This results in an improved performance of the wireless communications network.

An advantage of embodiments disclosed herein is that they reduce the synchronization errors but also limit the number of simultaneous transmissions for synchronization signals. Further, embodiments disclosed herein ensure backwards compatibility with wireless devices operating according to legacy procedures, e.g. without CA.

### BRIEF DESCRIPTION OF THE DRAWINGS

Examples of embodiments herein are described in more detail with reference to attached drawings in which:
- **Figure 1**: schematically illustrates V2x scenarios for an LTE-based communications network;
- **Figure 2**: is a schematic block diagram illustrating embodiments of a wireless communications network;
- **Figure 3**: is a flowchart depicting embodiments of methods in a wireless device;
- **Figure 4**: is schematic block diagram illustrating embodiments of a wireless device;
- **Figure 5**: is a flowchart depicting embodiments of a method in a network node;
- **Figure 6**: is schematic block diagram illustrating embodiments of a network node;
- **Figure 7**: schematically illustrates a telecommunication network connected via an intermediate network to a host computer;
- **Figure 8**: is a generalized block diagram of a host computer communicating via a base station with a user equipment over a partially wireless connection; and
- **Figures 9-12**: are flowcharts illustrating methods implemented in a communication system including a host computer, a base station and a user equipment.

### DETAILED DESCRIPTION

Embodiments herein may refer to Carrier aggregation, PHY layer, Sidelink (SL), Intelligent Transport Systems (ITS).

Some embodiments disclosed herein define the signaling that is necessary to switch off and on the SLSS transmissions on a particular carrier in case of CA with limited wireless device transmit capability and in case of single carrier transmission (i.e. a non-CA case), respectively. Thus, some embodiments disclosed herein define the signaling for switching off and on the SLSS transmissions on a particular carrier in dependence of the transmit capability of the wireless device. According to embodiments disclosed herein, a new signaling condition is defined which initiates the SLSS transmissions on the carrier, i.e. the particular carrier.

Furthermore, some embodiments also define one or more criteria or rules to decide the transmission of the synchronization signals i.e. the SLSS, on a component carrier in case of carrier aggregation.

Some embodiments herein comprise rules, procedures, and signals used for transmission of the SLSS (including SL MIB) by wireless devices that are performing carrier aggregation. According to embodiments, distinction is made between whether or not the wireless device is operating in carrier aggregation mode and the transmission of the SLSS is adapted accordingly. In this way, optimizations for multiple carriers may be obtained while ensuring a backwards compatible behavior for the case when the wireless device is not aggregating carriers.

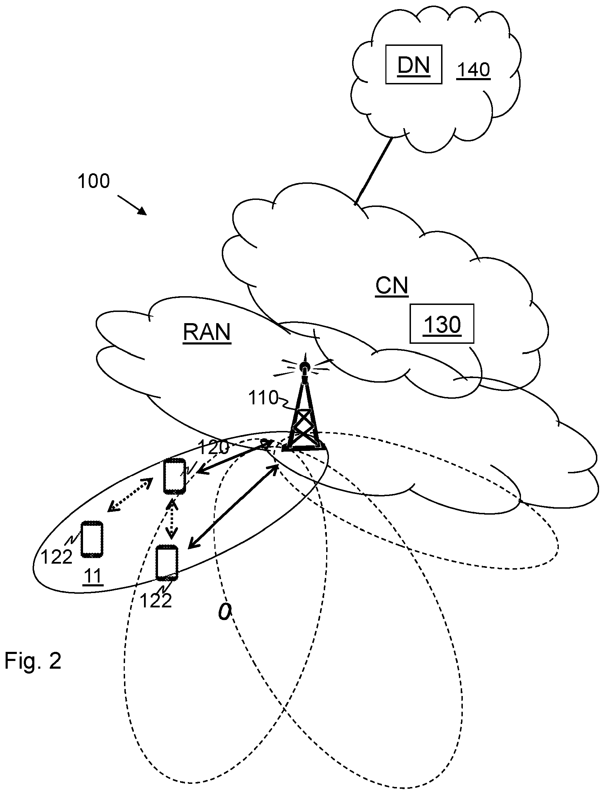

Embodiments herein relate to wireless communication networks in general. Figure **2** is a schematic overview depicting **a wireless communications network 100** sometimes referred to as a radio communications network. The wireless communications network 100 comprises one or more RANs and one or more CNs. The wireless communications network 100 may use a number of different technologies, such as Narrow Band Internet of Things (NB-loT), CAT-M, Wi-Fi, enhanced Machine Type Communication (eMTC), Long Term Evolution (LTE), LTE-Advanced, 5G, New Radio (NR), Wideband Code Division Multiple Access (WCDMA), Global System for Mobile communications/enhanced Data rate for GSM Evolution (GSM/EDGE), Worldwide Interoperability for Microwave Access (WiMax), or Ultra Mobile Broadband (UMB), just to mention a few possible implementations.

A **first wireless device 120** and one or more second **wireless devices 122** operate in the wireless communications network 100. The first and second wireless devices 120,122 may be referred to as first and second UEs 120,122 or referred to just as wireless devices 120,122. For example, the first and second wireless devices 120,120 are configured to provide D2D communications between/with each other. Further, the first and second wireless devices 120,122 may be carried by a user or may be arranged in or at any type of vehicle in order to provide V2X communications. Furthermore, the wireless devices 120,122 are capable of operating in a CA transmission mode.

The wireless devices 120, 122 may each e.g. be a mobile station, a non-access point (non-AP) STA, a STA, a user equipment and/or a wireless terminals, an NB-loT device, an eMTC device and a CAT-M device, a WiFi device, an LTE device and an NR device communicate via one or more Access Networks (ANs), e.g. RANs, to one or more Core Networks (CNs). It should be understood by the skilled in the art that "wireless device" is a non-limiting term which means any terminal, wireless communication terminal, user equipment, Device to Device (D2D) terminal, or node e.g. smart phone, laptop, mobile phone, sensor, relay, mobile tablets or even a small base station communicating within a cell.

Network nodes operate in the radio communications network 100, such as a **network node 110** also referred to as the first network node 110, providing radio coverage over a geographical area, **a service area 11**, which may also be referred to as a beam or a beam group of a first Radio Access Technology (RAT), such as 5G, LTE, Wi-Fi, NB-loT, CAT-M, Wi-Fi, eMTC or similar. The network node 110 may be a transmission and reception point e.g. a radio access network node such as a Wireless Local Area Network (WLAN) access point or an Access Point Station (AP STA), an access controller, a base station, e.g. a radio base station such as a NodeB, an evolved Node B (eNB, eNode B), a gNB, a base transceiver station, a radio remote unit, an Access Point Base Station, a base station router, a transmission arrangement of a radio base station, a stand-alone access point or any other network unit capable of communicating with a wireless device within the service area served by the network node 110 depending e.g. on the radio access technology and terminology used. The network node 110 may be referred to as a serving radio network node and communicates with the wireless device 120, 122 with Downlink (DL) transmissions to the wireless device 120, 122 and Uplink (UL) transmissions from the wireless device 120, 122.

Further network nodes operate in the radio communications network 100, such as **a network node 130** also referred to as the second network node 130. The network node 130 may be an MME which is a control node for an LTE access network, a Serving Gateway (SGW), and a Packet Data Network Gateway (PGW). An MME is amongst other responsible for tracking and paging procedure including retransmissions.

Actions described herein may be performed by any of the network node 110 such as e.g. an eNB or by the network node 130 such as e.g. an MME. Thus methods according to embodiments herein may be performed by the network node referred to as the network node 110, 130.

Methods e.g. for transmission of synchronization signals in the wireless communications network 110, are performed by the wireless device 120,122. As an alternative, a Distributed Node (DN) and functionality, e.g. comprised in a **cloud 140** as shown in Figure 2 may be used for performing or partly performing the methods.

### Actions of some embodiments herein

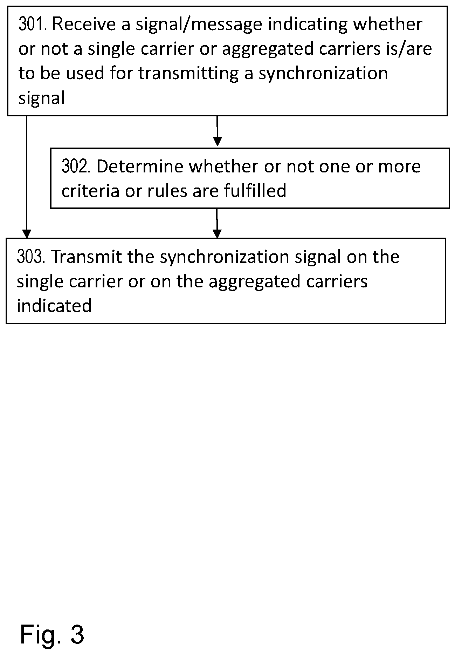

Example embodiments of a flowchart depicting embodiments of a method performed by the first wireless device 120, e.g. for transmitting a synchronization signal to the second wireless device 122 is depicted in **Figure 3** and will be described more in detail in the following.

As previously mentioned, the first and second wireless devices 120,122 are capable of transmitting signals on a single carrier or on aggregated carriers. Some embodiments herein relate to signaling procedures and rules for transmissions of synchronization signals for sidelink Carrier Aggregation (SL CA).

Further, as also previously mentioned, the first and second wireless devices 120,122 are operating in the wireless communications network 100. The method may comprise one or more of the following actions which actions may be taken in any suitable order. Further, one or more actions may be optional and actions may be combined.

In **action 301,** the first wireless device 120 receives, e.g. from the network node 110 such as the eNB, a signal or a message indicating whether or not a carrier, i.e. a single carrier or one or more aggregated carriers, is/are to be used for transmitting a synchronization signal to the second wireless device 122.

Thus, the wireless device 120 may receive, from the network node 110, a message indicating whether or not a carrier is to be used for transmitting a synchronization signal to the second wireless device 122. As will be described below, the message may indicate whether or not the carrier is to be used by a parameter comprised in the message, which parameter indicates whether or not the carrier is to be used for transmission of the synchronization signal. The parameter may be a Boolean type of parameter indicating whether the transmission of the synchronization signal is allowed or not in a particular carrier. It should be understood that the message may indicate whether or not one or more carriers out of a total number of carriers are available for the transmission of synchronizations signals. Thus, the message may comprise a plurality of parameters, e.g. one parameter per carrier, and each parameter may indicate whether or not the carrier to which it is associated should be used to transmit a synchronization signal. Further, that the message indicates a carrier to be used for transmission of the synchronization signal means that the one or more parameters comprised in the message each may provide a direct indication indicating the carrier to be used or an indirect indication indicating a carrier not to be used for transmission of the synchronization signal. In this disclosure the parameter is sometimes referred to as a carrierAggregationSyncTx parameter but it should be understood that other terms may be used for the parameter. The carrierAggregationSyncTX parameter indicates whether or not a carrier is to be used for the transmission of the synchronization signal. However, as mentioned above, the message may comprise one or more parameters that indirectly indicate a carrier to be used by for example indicating one or more carriers that is/are not to be used for transmission of the synchronization signal(s). One example of such a parameter is a slss-TxDisabled parameter which indicates a carrier for which the transmission of the synchronization signal is disabled. If the parameter, e.g. the slss-TxDisabled parameter, is not comprised for a carrier in the message, that may implicitly indicate that the transmission of the synchronization signal is allowed in that carrier.

In some embodiments, the first wireless device 120 is preconfigured with an indication indicating whether or not a single carrier or one or more aggregated carriers is/are to be used for transmitting the synchronization signal to the second wireless device 122. In other words, the first wireless device 120 may be preconfigured with an indication indicating a single carrier that may be used for transmitting the synchronization signal to the second wireless device 122 or the wireless device 120 may be preconfigured with an indication indicating one or more aggregated carriers that may be used for transmitting the synchronization signal(s) to the second wireless device 122. Thus, the first wireless device 120 may be preconfigured with one or more carriers that may be used for transmitting synchronization signals to the second wireless device 122.

The synchronization signal may be an SLSS transmission. In this disclosure the terms "synchronization signal" and "SLSS transmission" are used interchangeably. As previously mentioned, the SLSS transmission comprises transmission of the SLSS and the SL MIB.

In some embodiments, the first wireless device receives the message indicating whether or not multiple carriers out of aggregated carriers are to be used for transmitting synchronization signals to the second wireless device 122. Thus, the message may indicate whether or not a plurality of carriers, e.g. a plurality of component carriers in case of carrier aggregation, are to be used for transmitting the synchronization signals. It should be understood that each indicated carrier is used for transmitting one synchronization signal.

In **action 302,** the first wireless device 120 determines whether or not one or more criteria or rules are fulfilled. Thus, the first wireless device 120 may determine whether or not one or more criteria for transmission of synchronization signals are fulfilled. As will be described below, the one or more criteria or rules may relate to one or more out of:
- the transmission capability of the first wireless device 120,
- whether or not the first wireless device 120 is operating in a CA transmission mode,
- a requirement of a service to be provided, e.g. transmitted, to the second wireless device (122). For example, the requirements of a V2X service to be provided, '
- a value of Reference Signal Received Power (RSRP), e.g. a measured RSRP value, in relation to a threshold value. For example, the RSRP may be evaluated on each carrier, i.e. each component carrier, among the aggregated carriers.
- an identity of a service to be provided, e.g. transmitted, to the second wireless device 122, e.g. to the second wireless device 122 associated to the one or more carriers,
- an identity of a destination, e.g. the identity of the second wireless device 122, for the synchronization signal,
- a combination of carriers that may be used for a certain service,
etc.

As mentioned above, the criteria or rules may be applied by the first wireless device 120 when operating in a carrier aggregation mode. In such a scenario, one or more of the criteria or rules control transmission of synchronization signals, i.e. the SLSS, on one or more aggregated carriers, i.e. on one or more component carriers.

In **action 303,** the first wireless device 120 transmits, e.g. to the second wireless device 122, a synchronization signal on the carrier, e.g. the single carrier or on the aggregated carriers, indicated by the received signal or message, or indicated by a preconfiguration. In some embodiments, the first wireless device 120 transmits the synchronization signal(s) to the second wireless device 122 when one or more criteria or rules are fulfilled. In other words, the first wireless device 120 may transmit synchronization signal(s) to the second wireless device 122 on the one or more indicated carriers out of the aggregated carriers in which one or more indicated carriers the one or more criteria or rules are fulfilled.

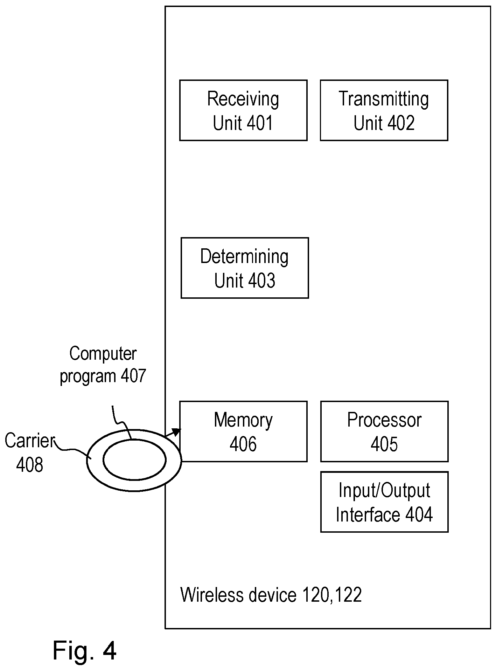

To perform the method actions e.g. for transmitting a synchronization signal, the first wireless device 120 may comprise the arrangement depicted in **Figure 4****.** The first wireless device 120 may e.g. comprise **a receiving unit 401, a transmitting unit 402,** and **a determining unit 403.** As previously mentioned, the first and second wireless devices 120,122 are configured to operate in the wireless communications network 100.

The first wireless device 120 is configured to receive, e.g. by means of the receiving unit 401, a signal, message or information from one or more nodes operating in the communications network 100. The receiving unit 401 may be implemented by or arranged in communication with **a processor 405** of the first wireless device 120. The processor 405 will be described in more detail below.

The first wireless device 120 is configured to receive, e.g. from the network node 110 such as the eNB, a signal or a message indicating whether or not a carrier, i.e. a single carrier or one or more aggregated carriers, is/are to be used for transmitting a synchronization signal to the second wireless device 122.

Thus, the wireless device 120 is configured to receive, from the network node 110, a message indicating whether or not a carrier is to be used for transmitting a synchronization signal to the second wireless device 122.

In some embodiments, the first wireless device 120 is configured to receive the message indicating whether or not multiple carriers out of aggregated carriers are to be used for transmitting synchronization signals to the second wireless device 122.

The first wireless device 120 is configured to transmit, e.g. by means of the transmitting unit 402, a signal, message or information to one or more nodes operating in the communications network 100. The transmitting unit 402 may be implemented by or arranged in communication with the processor 405.

The first wireless device 120 is configured to transmit, e.g. to the second wireless device 122, a synchronization signal on the single carrier or synchronization signals on one or more of the aggregated carriers indicated by the received signal or message.

Thus, the first wireless device 120 is configured to transmit, to the second wireless device, a synchronization signal on the carrier indicated by the received message.

In some embodiments, the first wireless device 120 is configured to transmit the synchronization signals on one or more carriers out of the aggregated carriers in which the one or more criteria are fulfilled.

The first wireless device 120 may be configured to determine, e.g. by means of the determining unit 403, whether or not one or more criteria for transmission of synchronization signals are fulfilled. The determining unit 403 may be implemented by or arranged in communication with the processor 405.

Those skilled in the art will also appreciate that the units in the first wireless device 120, described above may refer to a combination of analog and digital circuits, and/or one or more processors configured with software and/or firmware, e.g. stored in the first wireless device 120, that when executed by the respective one or more processors such as the processors described below. One or more of these processors, as well as the other digital hardware, may be included in a single Application-Specific Integrated Circuitry (ASIC), or several processors and various digital hardware may be distributed among several separate components, whether individually packaged or assembled into a system-on-a-chip (SoC).

The first wireless device 120 may comprise **an input and output interface 404** configured to communicate with the network node 110 and the second wireless device 122. The input and output interface may comprise a wireless receiver (not shown) and a wireless transmitter (not shown).

The embodiments herein may be implemented through a respective processor or one or more processors, such as the **processor 405** of a processing circuitry in the first wireless device 120 depicted in Figure 4, together with respective computer program code for performing the functions and actions of the embodiments herein. The program code mentioned above may also be provided as a computer program product, for instance in the form of a data carrier carrying computer program code for performing the embodiments herein when being loaded into the first wireless device 120. One such carrier may be in the form of a CD ROM disc. It is however feasible with other data carriers such as a memory stick. The computer program code may furthermore be provided as pure program code on a server and downloaded to the first wireless device 120.

The first wireless device 120 may further comprise a **memory 406** comprising one or more memory units. The memory comprises instructions executable by the processor in the first wireless device 120.

The memory is arranged to be used to store e.g. data, configurations, and applications to perform the methods herein when being executed in the first wireless device 120.

In some embodiments, a respective **computer program 407** comprises instructions, which when executed by the respective at least one processor, cause the at least one processor of the first wireless device 120 to perform the actions above.

In some embodiments, a respective **carrier 408** comprises the respective computer program, wherein the carrier is one of an electronic signal, an optical signal, an electromagnetic signal, a magnetic signal, an electric signal, a radio signal, a microwave signal, or a computer-readable storage medium. These respective carriers comprising the respective computer program may be referred to as computer program carriers in order to distinguish these respective carriers from the carrier(s) used for transmission of the synchronization signal(s) from the first wireless device 120 to the second wireless device 122.

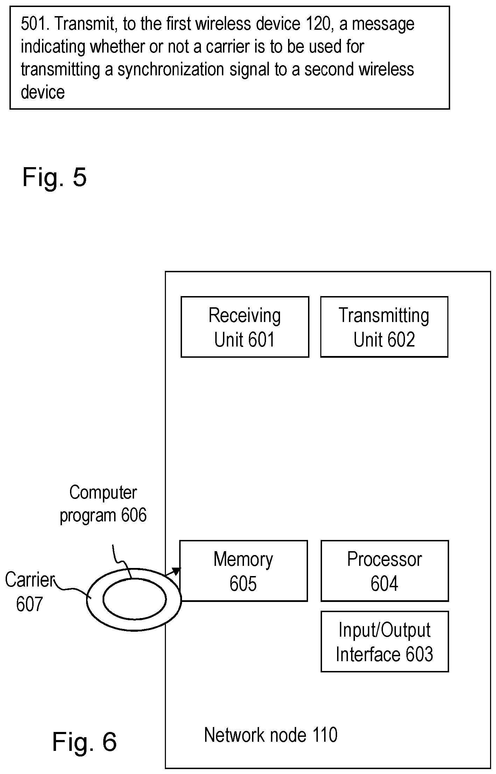

Example embodiments of a flowchart depicting embodiments of a method performed by the network node 110, e.g. for controlling the first wireless device 120 to transmit a synchronization signal to a second wireless device 122 is depicted in Figure 5 and will be described more in detail in the following.

As previously mentioned, the network node 110 and the first and second wireless devices 120,122 are operating in the wireless communications network 100. The method may comprise one or more of the following actions which actions may be taken in any suitable order. Further, one or more actions may be optional and actions may be combined.

In **action 501,** the network node 110 transmits, to the first wireless device 120, a signal or a message indicating whether or not a carrier, i.e. a single carrier or one or more aggregated carriers, is/are to be used by the first wireless device 120 for transmitting a synchronization signal to the second wireless device 122.

Thus, the network node 110 may transmit, to the first wireless device 120, a message indicating whether or not a carrier is to be used for transmitting a synchronization signal to the second wireless device 122.

In some embodiments, the network node 110 transmits the message indicating whether or not multiple carriers out of aggregated carriers are to be used by the first wireless device 120 for transmitting synchronization signals to the second wireless device 122.

To perform the method actions e.g. for controlling the first wireless device 120 to transmit a synchronization signal to the second wireless device 122, the network node 110 may comprise the arrangement depicted in **Figure 6****.** The network node 110 may e.g. comprise **a receiving unit 601,** and **a transmitting unit 602.** As previously mentioned, the network node 110 and the first and second wireless devices 120,122 are configured to operate in the wireless communications network 100.

The network node 110 is configured to receive, e.g. by means of the receiving unit 601, a signal, message or information from one or more nodes operating in the communications network 100. The receiving unit 601 may be implemented by or arranged in communication with a **processor 604** of the network node 110. The processor 604 will be described in more detail below.

The network node 110 is configured to transmit, e.g. by means of the transmitting unit 602, a signal, message or information to one or more nodes operating in the communications network 100. The transmitting unit 602 may be implemented by or arranged in communication with the processor 604.

The network node 110 is configured to transmit, to the first wireless device 120, a signal or a message indicating whether or not a carrier, i.e. a single carrier or one or more aggregated carriers, is/are to be used by the first wireless device 120 for transmitting a synchronization signal to the second wireless device 122.

Thus, the network node 110 may be configured to transmit, to the first wireless device 120, a message indicating whether or not a carrier is to be used for transmitting a synchronization signal to the second wireless device 122.

In some embodiments, the network node 110 is configured to transmit the message indicating whether or not multiple carriers out of aggregated carriers are to be used by the first wireless device 120 for transmitting synchronization signals to the second wireless device 122.

Those skilled in the art will also appreciate that the units in the network node 110, described above may refer to a combination of analog and digital circuits, and/or one or more processors configured with software and/or firmware, e.g. stored in the network node 110, that when executed by the respective one or more processors such as the processors described below. One or more of these processors, as well as the other digital hardware, may be included in a single Application-Specific Integrated Circuitry (ASIC), or several processors and various digital hardware may be distributed among several separate components, whether individually packaged or assembled into a system-on-a-chip (SoC).

The network node 110 may comprise **an input and output interface 603** configured to communicate with the first wireless device 120 and the second wireless device 122. The input and output interface may comprise a wireless receiver (not shown) and a wireless transmitter (not shown).

The embodiments herein may be implemented through a respective processor or one or more processors, such as the **processor 604** of a processing circuitry in the network node 110 depicted in Figure 6, together with respective computer program code for performing the functions and actions of the embodiments herein. The program code mentioned above may also be provided as a computer program product, for instance in the form of a data carrier carrying computer program code for performing the embodiments herein when being loaded into the network node 110. One such carrier may be in the form of a CD ROM disc. It is however feasible with other data carriers such as a memory stick. The computer program code may furthermore be provided as pure program code on a server and downloaded to the network node 110.

The network node 110 may further comprise a **memory 605** comprising one or more memory units. The memory comprises instructions executable by the processor in the network node 110.

The memory is arranged to be used to store e.g. data, configurations, and applications to perform the methods herein when being executed in the network node 110.

In some embodiments, a respective **computer program 606** comprises instructions, which when executed by the respective at least one processor, cause the at least one processor of the network node 110 to perform the actions above.

In some embodiments, a respective **carrier 607** comprises the respective computer program, wherein the carrier is one of an electronic signal, an optical signal, an electromagnetic signal, a magnetic signal, an electric signal, a radio signal, a microwave signal, or a computer-readable storage medium. As mentioned above, these respective carriers comprising the respective computer program may be referred to as computer program carriers in order to distinguish these respective carriers from the carrier(s) used for transmission of the synchronization signal(s) from the first wireless device 120 to the second wireless device 122.

### Exemplifying signaling procedures for synchronization signal transmissions

According to some embodiments, a signal or a message, e.g. an RRC message comprising an RRC parameter or an Information Element (IE), is defined, which signal or message controls the wireless device's 120,122 transmission of synchronization signals in a carrier. Thus, when the first wireless device 120 is in receipt of such message indicating that the carrier may be used for transmission of one or more synchronization signals to the second wireless device 122, the first wireless device 120 may transmit one or more synchronization signals to the second wireless device 122 on the indicated carrier. The indication that the carrier may be used for transmission of a synchronization signal is sometimes in this disclosure referred to as the carrier is set to "on". Whether or not a carrier will be used for transmission of the synchronization signals depends on whether or not the usage of the carrier for transmission of the synchronization signals is indicated as enabled, e.g. set to "on", or disabled in the message. In case no indication for transmission of the synchronization signals in a carrier is indicated in the message, the usage of the carrier for transmission of the synchronization signals is enabled or disabled. It should be understood that the first wireless device 120 may be preconfigured with one or more carriers that may be used for transmission of synchronization signals. Thus, the carrier indicated in the message and used for the transmission of the synchronization signal may be one out of a plurality of preconfigured carriers. Further, the message may indicate one or more aggregated carriers, i.e. one or more component carriers, to be used for transmission of synchronization signals. However, in case of aggregated carriers, the transmission of synchronization signals may depend on whether or not one or more critera for transmission of synchronization signals on the aggregated carriers are fulfilled. Examples of such criteria or rules will be described below.

Even if reference sometimes herein is made to an RRC message and to an RRC parameter, it should be understood that the message may be another type of message and that the parameter may be another type of parameter. For example, the message may be a MAC Control Element (MAC CE) or an SL grant on the PDCCH. The message may comprise an RRC parameter similar to networkControlledSyncTx in Release 14. Sometimes in this disclosure such an RRC parameter is referred to as a CA synchronization transmit (carrierAggregationSyncTx) parameter. Such an RRC parameter may be a Boolean type of field or an enumerated (e.g. indicating on or off) type of field to indicate whether SLSS transmission is allowed or not on a particular carrier. For instance, if this newly defined RRC parameter is configured, e.g. preconfigured, for a particular carrier and it is set to "on", a wireless device 120,122 configured with such an RRC parameter may initiate the transmission of one or more synchronization signals on the particular carrier. Thus, the wireless device 120,122 may be configured or preconfigured with a carrier that may be used for transmission of a synchronization signal. If such a wireless device 120, 122 receives, e.g. from the network node 110, a message indicating that the (pre)configured carrier is set to "on", that initiates the wireless device 120,120 to transmit the synchronization signal on that preconfigured carrier. As mentioned above, the message may indicate that a carrier is set to "on" by comprising the parameter e.g. the carrierAggregationSyncTx parameter set to "on", indicating that the carrier is enabled for transmission of the synchronization signals, or the slss-Disabled parameter set to "on", indicating that the carrier is disabled for transmission of the synchronization signals. It should be understood that the wireless device 120,122 may be (pre)configured with a plurality of carriers that may be used for transmission of synchronization signals. If such a wireless device 120, 122 receives, e.g. from the network node 110, a message indicating that one or more of the plurality of carriers are set to "on", that initiates the wireless device 120,120 to transmit the synchronization signals on the one or more of the plurality of carriers.

Furthermore, in order to control the transmission of one or more synchronization signals on a carrier, an extra criterion, condition or rule is specified if the newly defined signal or message, e.g. the carrierAggregationSyncTx parameter, is configured. According to the criterion or rule, even if the carrierAggregationSyncTx parameter is configured for a particular carrier and set to "on" but the UE is operating with CA transmission mode, it may not initiate the transmission of synchronization signals on that carrier if it exceeds the wireless device's transmission capability. For example, this may be the case when the wireless device does not support the particular combination of carriers or have radio frequency (RF) capability limitation etc. Furthermore, if the carrierAggregationSyncTx parameter is configured for a particular carrier and set to "on" but the wireless device 120,122 is operating with non-CA transmission mode, it will always initiate the transmission of synchronization signals on that particular carrier.

In some embodiments, the use of the carrierAggregationSyncTx parameter depends on the current configuration and/or behavior of the wireless device 120,122. For example, if at some point in time the wireless device 120,122 is aggregating certain carriers, transmission of the SLSS on one of the aggregated carriers uses the carrierAggregationSyncTx. In other words, if a carrier A is used with aggregation e.g., together with a carrier B, then whether the SLSS are transmitted or not (in Carrier A) depends on the carrierAggregationSyncTx parameter for Carrier A, i.e. it depends on whether or not the carrierAggregationSyncTx parameter for Carrier A is set to "on". If at some other point in time the wireless device 120,122 is using the carrier without aggregation, transmission of the SLSS does not use the carrierAggregationSyncTx (instead it relies on other signals and procedures).

In some embodiments, the (pre-)configuration is such that the carrierAggregationSyncTx parameter is set to "on" for at least one carrier among the carriers in which a certain V2X service may be provided. For example, assuming that a V2X service may be provided by both a first carrier and a second carrier, at least one of this frequency is (pre-)configured with the carrierAggregationSyncTx set to "on". This ensures that for at least one carrier related to such service the wireless device 120,122 would transmit the SLSS in the carrier as long as the RSRP is below a certain threshold (if RSRP threshold is configured) for that carrier.

In some embodiments, the (pre-)configuration is such that the carrierAggregationSyncTx is set to "on" for more than one carrier among the X carriers in which a certain V2X service may be provided. However, the (pre-)configuration may also indicate that transmissions of the SLSS in multiple carriers is limited. For example, the configuration may indicate that the SLSS shall be transmitted in at most Y carriers, where Y < X.

In some embodiments, the (pre-)configuration is such that the parameter carrierAggregationSyncTx is set to "on" per service. For example, the parameter carrierAggregationSyncTx may be associated to a certain service ID or destination ID. In such case if the carrierAggregationSyncTx is configured and set to "on" for a certain service ID and/or destination ID. It is up to the wireless device 120,122 to select one or more carriers associated to such service ID and/or destination ID for transmission of the SLSS. The wireless device 120,122 may for example follow any of the methods described below to determine which one out of the X carriers that may be selected. Furthermore, for some services, the carrierAggregationSyncTx is not configured at all, e.g. for those services for which GNSS synchronization is required, or for those services in which synchronization shall not be acquired by other wireless devices' SLSS.

In some embodiments, the carrierAggregationSyncTx is set per combination of carriers. For any combination of carriers, e.g. for any combination of carriers that may be used for a certain service, the configuration indicates the carrier(s) in a given combination that may be used for the SLSS transmission and related parameters to apply rules will be described below.

By performing the above procedure, the wireless device 120,122 performs different synchronization behavior on a carrier depending on the (pre-)configured transmission mode i.e. either CA or non-CA mode, and/or (pre-)configured services and/or its UE transmission capability (i.e. not enough transmission power, limited TX chain etc.).

### Exemplifying rules for synchronization signal transmissions

In this section, one or more rules, e.g. criteria, are defined to determine the transmission of synchronization signals, e.g. the SLSS/PSBCH, on a carrier. Such rules, e.g. criteria, is applied if a carrier is (pre-)configured as a synchronization carrier according to some embodiments but due to limited UE capabilities and due to resource allocation limitations, the wireless device 120,122 cannot transmit on all the (preconfigured synchronization carriers.

According to some embodiments, one or more criteria or rules are defined to decide on the carriers on which synchronization signals are transmitted and carriers on which synchronization signals are not transmitted in case of CA and/or limited UE Tx capability.

For example, synchronization signals may be transmitted on a carrier if that carrier is (pre-)configured with an eNB reference cell signal as a top synchronization reference.

According to some sub-embodiments, synchronization signals may be transmitted on a carrier if that carrier is (pre-)configured with the GNSS as a top synchronization reference or PSBCH on that carrier also carries TDD configuration information (i.e. UUDL ratio).

According to some embodiments, priority of carriers on which synchronization signals are transmitted is defined. For instance, a carrier with an eNB reference cell signal as top synchronization reference is highest priority for the SLSS transmission. The SLSS transmission on other carriers are dropped, i.e. not transmitted, if the wireless device 120,122 has limited transmit (TX) capability, e.g. not enough transmission power.

In some embodiments, the carriers selected for the SLSS transmission as per some previously described embodiments are selected on the basis of the UE capability, the UE operations, and the SLSS resource distribution. For example, if the SLSS resources are configured in the same Transmission Time Interval (TTI) or close in time across different carriers, the wireless device 120,122 may not be capable to transmit the SLSS in such carriers. Therefore, the selected carriers will only include those carriers in which the wireless device 120,122 is capable to transmit. Furthermore, the carriers may be selected on the basis of the carriers that come first in time with respect to System Frame Number (SFN) 0 (or Direct Frame Number (DFN) 0), or with respect to the moment in which certain conditions to transmit the SLSS become fulfilled.

According to some embodiments, the synchronization signals, also referred to as SLSS transmissions herein, are transmitted on carrier(s) if such carriers are selected for data transmissions or in those carriers in which the packets transmitted have priority higher than a certain threshold. If only one carrier shall be selected, the wireless device 120,122 selects the carrier in which highest priority packet is transmitted. In case the SLSS transmission occasions are not aligned in time with the data transmission, the wireless device 120,122 may prioritize the carrier(s) in which the wireless device 120,122 transmitted for last time data, or in which the wireless device 120,122 transmitted for last time data higher than a certain threshold.

For example, if at a first point in time T1 the wireless device 120,122 transmitted on a carrier 1, at a second point in time T2 on a carrier 2, at a third point in time T3 on a carrier 3, and the wireless device 120,122 has to transmit SLSS at a fourth point in time T4, the wireless device 120,122 prioritizes transmission of the SLSS on the carrier 3.

In some embodiments, the synchronization signals are transmitted on carrier(s) corresponding to a set of carriers in which the measured RSRP is lower than a certain threshold and with respect to the other carriers not in such set.

In some embodiments, the congestion on a carrier is considered, i.e. the SLSS are transmitted only in those carriers with lower Channel Busy Ratio (CBR) congestion (e.g. lower than a certain CBR threshold value). In some embodiments, the Received Signal Strength Indication (RSSI) is considered.

According to some embodiments, the wireless device 120,122 may be operating with different services and each service uses different transmission modes. For example, a first service 1 is (pre-)configured with only a non-CA transmission mode and a second service 2 is (pre-)configured with a CA transmission mode. In such scenario, the wireless device 120,122 always transmits or prioritizes transmission of synchronization signals on a carrier on which the non-CA transmissions/services are configured on, i.e. the synchronization signals shall be transmitted at least in those carriers used for SL V2X communications which are not configured for CA operations and in which carriers transmission of the SLSS transmission signal is allowed by configuration (e.g. carrierAggregationSyncTx set to "on" and RSRP below a certain threshold value). Consider the following example:
- Service 1 mapped to carrier 1 and carrier 2. CA allowed
- Service 2 mapped to carrier 2 and carrier 3. CA not allowed

Assume that the first wireless device 120 has to perform V2X SL communication with the second wireless device 122 for service 1, and that the first wireless device 120 cannot perform the SLSS transmission both on carrier 1 and carrier 2, e.g. due to either capability limitation, or the first wireless device 120 is not configured to do that or the rules disclosed in the previous embodiments do not allow the first wireless device 120 to do that. In such case, the first wireless device 120 prioritizes the SLSS transmission in carrier 2, since carrier 2 is shared between the wireless device 120,122 performing V2X SL communication of service 1 and service 2.

In some embodiments considering that the set of carriers configured for V2X SL communication of one service overlaps with the set of carriers configured for V2X SL communication of another service, the wireless device 120,122 prioritizes the SLSS transmission in those carriers that are part of the overlapping set, as long as (pre)configuration and other rules (e.g. those rules previously described) allow the wireless device 120,122 to do so.

As previously mentioned, limited transmission power and half duplex are two problems the wireless device 120,122 has to minimize while deciding on the transmission of synchronization signals simultaneously on multiple carriers. The above embodiments describe the signaling procedures and rules to limit the transmission of synchronization signals on single (or a few carriers). Furthermore, in order to minimize the half duplex and limited transmission power, an embodiment is described which defines the rules for subframe selection for synchronization signals transmission. According to some embodiments, subframes selected for synchronization signal transmissions are different for carriers with eNB as synchronization reference and carriers with the GNSS as synchronization carriers in order to reduce power limitation issues.

It is to be noted that combinations of the above described embodiments may also be possible. For example, the wireless device 120,122 may transmit multiple synchronization signals on carriers with the eNB and the GNSS as synchronization source if the transmission subframes are different.

### Further Extensions and Variations

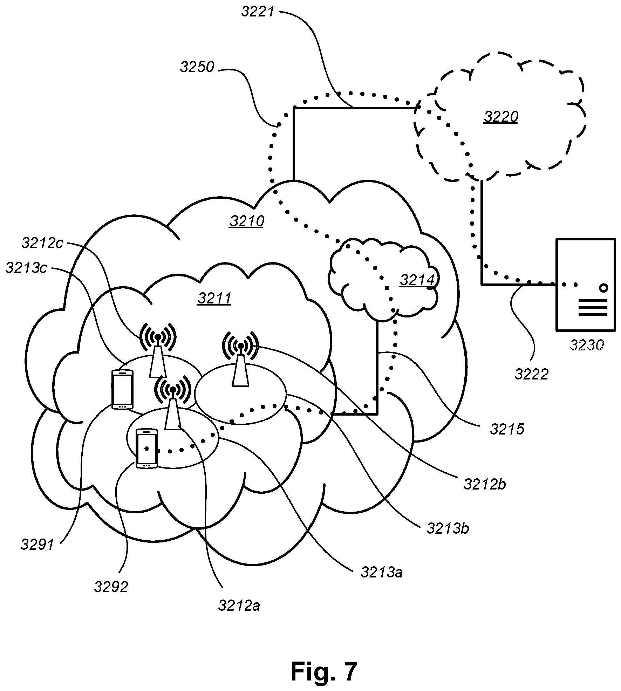

With reference to **Figure 7****,** in accordance with an embodiment, a communication system includes a telecommunication network 3210 such as the wireless communications network 100, e.g. a WLAN, such as a 3GPP-type cellular network, which comprises an access network 3211, such as a radio access network, and a core network 3214. The access network 3211 comprises a plurality of base stations 3212a, 3212b, 3212c, such as the network node 110, 130, access nodes, AP STAs NBs, eNBs, gNBs or other types of wireless access points, each defining a corresponding coverage area 3213a, 3213b, 3213c. Each base station 3212a, 3212b, 3212c is connectable to the core network 3214 over a wired or wireless connection 3215. A first user equipment (UE) e.g. the wireless device 120 such as a Non-AP STA 3291 located in coverage area 3213c is configured to wirelessly connect to, or be paged by, the corresponding base station 3212c. A second UE 3292 e.g. the wireless device 122 such as a Non-AP STA in coverage area 3213a is wirelessly connectable to the corresponding base station 3212a. While a plurality of UEs 3291, 3292 are illustrated in this example, the disclosed embodiments are equally applicable to a situation where a sole UE is in the coverage area or where a sole UE is connecting to the corresponding base station 3212.

The telecommunication network 3210 is itself connected to a host computer 3230, which may be embodied in the hardware and/or software of a standalone server, a cloud-implemented server, a distributed server or as processing resources in a server farm. The host computer 3230 may be under the ownership or control of a service provider, or may be operated by the service provider or on behalf of the service provider. The connections 3221, 3222 between the telecommunication network 3210 and the host computer 3230 may extend directly from the core network 3214 to the host computer 3230 or may go via an optional intermediate network 3220. The intermediate network 3220 may be one of, or a combination of more than one of, a public, private or hosted network; the intermediate network 3220, if any, may be a backbone network or the Internet; in particular, the intermediate network 3220 may comprise two or more sub-networks (not shown).

The communication system of Figure 7 as a whole enables connectivity between one of the connected UEs 3291, 3292 and the host computer 3230. The connectivity may be described as an over-the-top (OTT) connection 3250. The host computer 3230 and the connected UEs 3291, 3292 are configured to communicate data and/or signaling via the OTT connection 3250, using the access network 3211, the core network 3214, any intermediate network 3220 and possible further infrastructure (not shown) as intermediaries. The OTT connection 3250 may be transparent in the sense that the participating communication devices through which the OTT connection 3250 passes are unaware of routing of uplink and downlink communications. For example, a base station 3212 may not or need not be informed about the past routing of an incoming downlink communication with data originating from a host computer 3230 to be forwarded (e.g., handed over) to a connected UE 3291. Similarly, the base station 3212 need not be aware of the future routing of an outgoing uplink communication originating from the UE 3291 towards the host computer 3230.

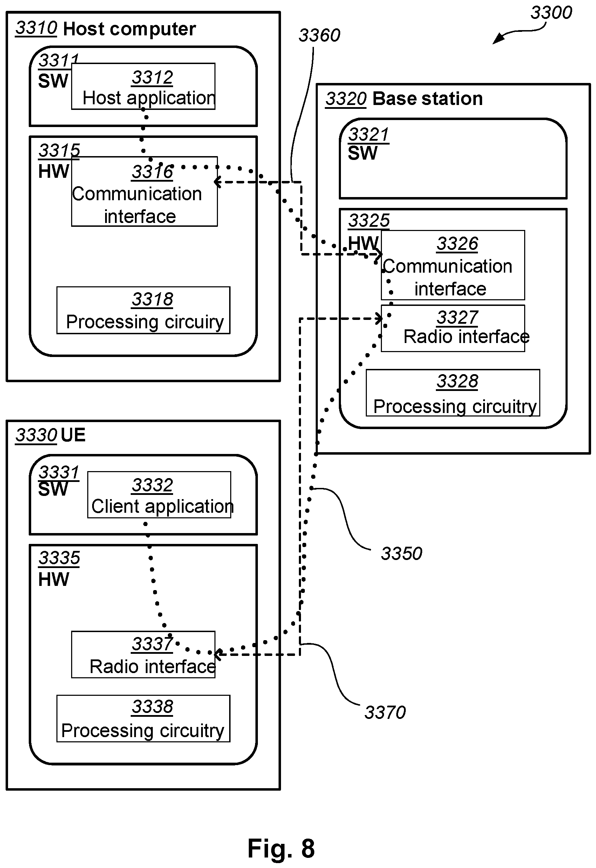

Example implementations, in accordance with an embodiment, of the UE, base station and host computer discussed in the preceding paragraphs will now be described with reference to Figure 8. In a communication system 3300, a host computer 3310 comprises hardware 3315 including a communication interface 3316 configured to set up and maintain a wired or wireless connection with an interface of a different communication device of the communication system 3300. The host computer 3310 further comprises processing circuitry 3318, which may have storage and/or processing capabilities. In particular, the processing circuitry 3318 may comprise one or more programmable processors, application-specific integrated circuits, field programmable gate arrays or combinations of these (not shown) adapted to execute instructions. The host computer 3310 further comprises software 3311, which is stored in or accessible by the host computer 3310 and executable by the processing circuitry 3318. The software 3311 includes a host application 3312. The host application 3312 may be operable to provide a service to a remote user, such as a UE 3330 connecting via an OTT connection 3350 terminating at the UE 3330 and the host computer 3310. In providing the service to the remote user, the host application 3312 may provide user data which is transmitted using the OTT connection 3350.

The communication system 3300 further includes a base station 3320 provided in a telecommunication system and comprising hardware 3325 enabling it to communicate with the host computer 3310 and with the UE 3330. The hardware 3325 may include a communication interface 3326 for setting up and maintaining a wired or wireless connection with an interface of a different communication device of the communication system 3300, as well as a radio interface 3327 for setting up and maintaining at least a wireless connection 3370 with a UE 3330 located in a coverage area (not shown in Figure 19) served by the base station 3320. The communication interface 3326 may be configured to facilitate a connection 3360 to the host computer 3310. The connection 3360 may be direct or it may pass through a core network (not shown in Figure 19) of the telecommunication system and/or through one or more intermediate networks outside the telecommunication system. In the embodiment shown, the hardware 3325 of the base station 3320 further includes processing circuitry 3328, which may comprise one or more programmable processors, application-specific integrated circuits, field programmable gate arrays or combinations of these (not shown) adapted to execute instructions. The base station 3320 further has software 3321 stored internally or accessible via an external connection.

The communication system 3300 further includes the UE 3330 already referred to. Its hardware 3335 may include a radio interface 3337 configured to set up and maintain a wireless connection 3370 with a base station serving a coverage area in which the UE 3330 is currently located. The hardware 3335 of the UE 3330 further includes processing circuitry 3338, which may comprise one or more programmable processors, application-specific integrated circuits, field programmable gate arrays or combinations of these (not shown) adapted to execute instructions. The UE 3330 further comprises software 3331, which is stored in or accessible by the UE 3330 and executable by the processing circuitry 3338. The software 3331 includes a client application 3332. The client application 3332 may be operable to provide a service to a human or non-human user via the UE 3330, with the support of the host computer 3310. In the host computer 3310, an executing host application 3312 may communicate with the executing client application 3332 via the OTT connection 3350 terminating at the UE 3330 and the host computer 3310. In providing the service to the user, the client application 3332 may receive request data from the host application 3312 and provide user data in response to the request data. The OTT connection 3350 may transfer both the request data and the user data. The client application 3332 may interact with the user to generate the user data that it provides.

It is noted that the host computer 3310, base station 3320 and UE 3330 illustrated in Figure 8 may be identical to the host computer 3230, one of the base stations 3212a, 3212b, 3212c and one of the UEs 3291, 3292 of Figure 7, respectively. This is to say, the inner workings of these entities may be as shown in Figure 8 and independently, the surrounding network topology may be that of Figure 7.

In Figure 8, the OTT connection 3350 has been drawn abstractly to illustrate the communication between the host computer 3310 and the use equipment 3330 via the base station 3320, without explicit reference to any intermediary devices and the precise routing of messages via these devices. Network infrastructure may determine the routing, which it may be configured to hide from the UE 3330 or from the service provider operating the host computer 3310, or both. While the OTT connection 3350 is active, the network infrastructure may further take decisions by which it dynamically changes the routing (e.g., on the basis of load balancing consideration or reconfiguration of the network).

The wireless connection 3370 between the UE 3330 and the base station 3320 is in accordance with the teachings of the embodiments described throughout this disclosure. One or more of the various embodiments improve the performance of OTT services provided to the UE 3330 using the OTT connection 3350, in which the wireless connection 3370 forms the last segment. More precisely, the teachings of these embodiments may improve the synchronization and thereby provide benefits such as extended battery lifetime.

A measurement procedure may be provided for the purpose of monitoring data rate, latency and other factors on which the one or more embodiments improve. There may further be an optional network functionality for reconfiguring the OTT connection 3350 between the host computer 3310 and UE 3330, in response to variations in the measurement results. The measurement procedure and/or the network functionality for reconfiguring the OTT connection 3350 may be implemented in the software 3311 of the host computer 3310 or in the software 3331 of the UE 3330, or both. In embodiments, sensors (not shown) may be deployed in or in association with communication devices through which the OTT connection 3350 passes; the sensors may participate in the measurement procedure by supplying values of the monitored quantities exemplified above, or supplying values of other physical quantities from which software 3311, 3331 may compute or estimate the monitored quantities. The reconfiguring of the OTT connection 3350 may include message format, retransmission settings, preferred routing etc.; the reconfiguring need not affect the base station 3320, and it may be unknown or imperceptible to the base station 3320. Such procedures and functionalities may be known and practiced in the art. In certain embodiments, measurements may involve proprietary UE signaling facilitating the host computer's 3310 measurements of throughput, propagation times, latency and the like. The measurements may be implemented in that the software 3311, 3331 causes messages to be transmitted, in particular empty or 'dummy' messages, using the OTT connection 3350 while it monitors propagation times, errors etc.

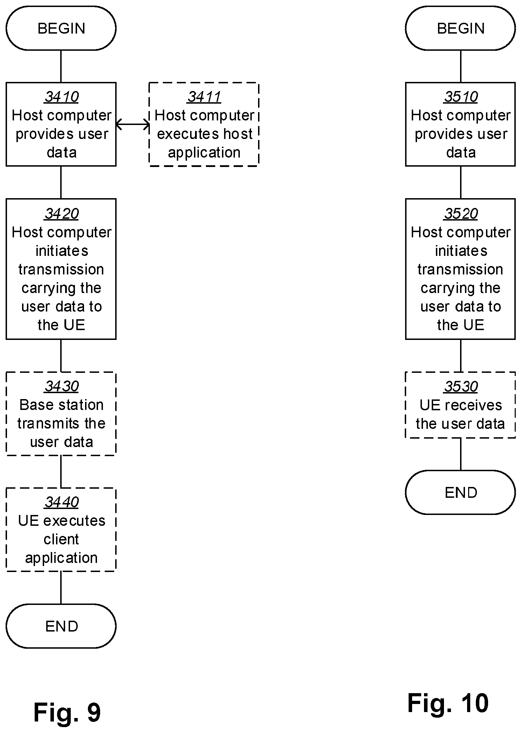

Figures 7 and 8 and the corresponding text are about a downstream aspect of the radio-related invention, while figures 9 and 10 and the corresponding text discuss an upstream aspect.

FIGURE 9 is a flowchart illustrating a method implemented in a communication system, in accordance with one embodiment. The communication system includes a host computer, a base station such as a AP STA, and a UE such as a Non-AP STA which may be those described with reference to Figures 7 and 8. For simplicity of the present disclosure, only drawing references to Figure 9 will be included in this section. In a first action 3410 of the method, the host computer provides user data. In an optional subaction 3411 of the first action 3410, the host computer provides the user data by executing a host application. In a second action 3420, the host computer initiates a transmission carrying the user data to the UE. In an optional third action 3430, the base station transmits to the UE the user data which was carried in the transmission that the host computer initiated, in accordance with the teachings of the embodiments described throughout this disclosure. In an optional fourth action 3440, the UE executes a client application associated with the host application executed by the host computer.

FIGURE 10 is a flowchart illustrating a method implemented in a communication system, in accordance with one embodiment. The communication system includes a host computer, a base station such as a AP STA, and a UE such as a Non-AP STA which may be those described with reference to Figures 7 and 8. For simplicity of the present disclosure, only drawing references to Figure 10 will be included in this section. In a first action 3510 of the method, the host computer provides user data. In an optional subaction (not shown) the host computer provides the user data by executing a host application. In a second action 3520, the host computer initiates a transmission carrying the user data to the UE. The transmission may pass via the base station, in accordance with the teachings of the embodiments described throughout this disclosure. In an optional third action 3530, the UE receives the user data carried in the transmission.

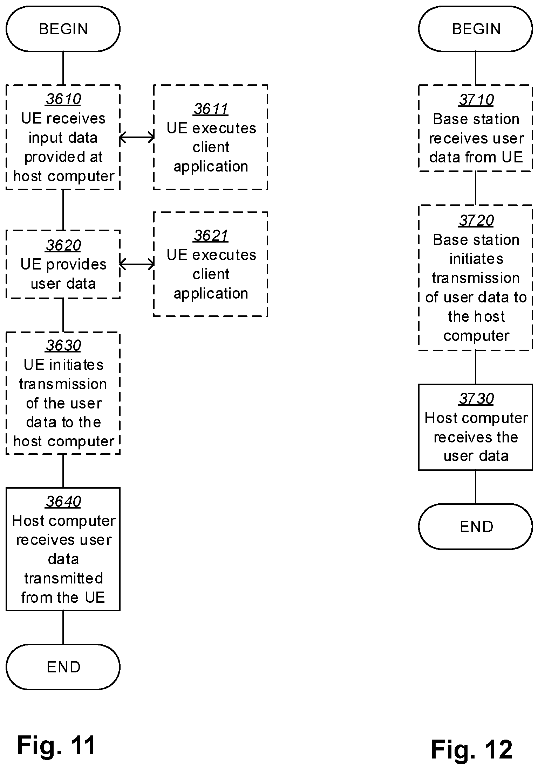

FIGURE 11 is a flowchart illustrating a method implemented in a communication system, in accordance with one embodiment. The communication system includes a host computer, a base station such as a AP STA, and a UE such as a Non-AP STA which may be those described with reference to Figures 7 and 8. For simplicity of the present disclosure, only drawing references to Figure 11 will be included in this section. In an optional first action 3610 of the method, the UE receives input data provided by the host computer. Additionally or alternatively, in an optional second action 3620, the UE provides user data. In an optional subaction 3621 of the second action 3620, the UE provides the user data by executing a client application. In a further optional subaction 3611 of the first action 3610, the UE executes a client application which provides the user data in reaction to the received input data provided by the host computer. In providing the user data, the executed client application may further consider user input received from the user. Regardless of the specific manner in which the user data was provided, the UE initiates, in an optional third subaction 3630, transmission of the user data to the host computer. In a fourth action 3640 of the method, the host computer receives the user data transmitted from the UE, in accordance with the teachings of the embodiments described throughout this disclosure.

FIGURE 12 is a flowchart illustrating a method implemented in a communication system, in accordance with one embodiment. The communication system includes a host computer, a base station such as a AP STA, and a UE such as a Non-AP STA which may be those described with reference to Figures 7 and 8. For simplicity of the present disclosure, only drawing references to Figure 12 will be included in this section. In an optional first action 3710 of the method, in accordance with the teachings of the embodiments described throughout this disclosure, the base station receives user data from the UE. In an optional second action 3720, the base station initiates transmission of the received user data to the host computer. In a third action 3730, the host computer receives the user data carried in the transmission initiated by the base station.

When using the word "comprise" or "comprising" it shall be interpreted as non-limiting, i.e. meaning "consist at least of".

The embodiments herein are not limited to the above described preferred embodiments. Various alternatives, modifications and equivalents may be used. The embodiments of the current invention are limited by the appended claims.

| **Abbreviation** | **Explanation** |
|---|---|
| CA | Carrier Aggregation |
| CBR | Channel Busy Ratio |
| DFN | Direct Frame Number |
| DL | Downlink |
| FDD | Frequency Division Duplex |
| GNSS | Global Navigation Satellite System |
| IE | Information Element |
| MIB | Master Information Block |
| RRC | Radio Resource Control |
| RSRP | Reference Signal Received Power |
| RSSI | Received Signal Strength Indicator |
| RX | Receive, receiver |
| SFN | System Frame Number |
| SL | Sidelink |
| SLSS | Sidelink Synchronization Signals |
| TDD | Time Division Duplex |
| TX | Transmit, transmitter |
| UE | User Equipment |
| UL | Uplink |

## Claims

1. A method performed by a first wireless device (120) for transmitting a synchronization signal to a second wireless device (122), wherein the first and second wireless devices (120,122) operate in a wireless communications network (100), and wherein the method comprises:
- receiving (301), from a network node (110) operating in the wireless communications network (100), a message indicating whether or not a carrier is to be used for transmitting a synchronization signal to the second wireless device (122); wherein the message further indicates whether or not multiple carriers out of aggregated carriers are to be used for transmitting synchronization signals to the second wireless device (122); and
- transmitting (303), to the second wireless device (122), a synchronization signal on a carrier indicated by the received message.

2. The method of claim 1, wherein the receiving (301), of the message further comprises:
- determining (302) whether or not one or more criteria for transmission of synchronization signals are fulfilled; and wherein the transmitting (303) of the synchronization signal on the carrier indicated by the received message comprises:
- transmitting the synchronization signals on one or more carriers out of the aggregated carriers in which the one or more criteria are fulfilled.

3. The method of claim 2, wherein the one or more criteria relate to one or more out of:
- a transmission capability of the first wireless device (120);
- whether or not the first wireless device (120) is operating in a Carrier Aggregation, CA, transmission mode;
- a requirement of a service to be provided to the second wireless device (122);
- a value of a Reference Signal Received Power, RSRP in relation to a threshold value;
- an identity of a service to be provided to the second wireless device (122) is associated to the one or more carriers;
- an identity of the second wireless device (122); and
- a combination of carriers that may be used for a certain service.

4. The method of any one of claims 1-3, wherein the first wireless device (120) is preconfigured with one or more carriers that may be used for transmitting synchronization signals to the second wireless device (122).

5. A method performed by a network node (110) for controlling a first wireless device (120) to transmit a synchronization signal to a second wireless device (122), wherein the network node (110), and the first and second wireless devices (120,122) operate in a wireless communications network (100), and wherein the method comprises:
- transmitting (501), to the first wireless device (120), a message indicating whether or not a carrier is to be used for transmitting a synchronization signal to the second wireless device (122) ; where in the message further indicates whether or not multiple carriers out of aggregated carriers are to be used by the first wireless device (120) for transmitting synchronization signals to the second wireless device (122).

6. A first wireless device (120) for transmitting a synchronization signal to a second wireless device (122), wherein the first and second wireless devices (120,122) are configured to operate in a wireless communications network (100), and wherein the first wireless device (120) is configured to:
- receive, from a network node (110) operating in the wireless communications network (100), a message indicating whether or not a carrier is to be used for transmitting a synchronization signal to the second wireless device (122), where in the message further indicates whether or not multiple carriers out of aggregated carriers are to be used by the first wireless device (120) for transmitting synchronization signals to the second wireless device (122); and
transmit, to the second wireless device (122), a synchronization signal on a carrier indicated by the received message.

7. The first wireless device (120) of claim 6, further being configured to:
- determine whether or not one or more criteria for transmission of synchronization signals are fulfilled; and
- transmit the synchronization signals on one or more carriers out of the aggregated carriers in which the one or more criteria are fulfilled.

8. The first wireless device (120) of claim 7, wherein the one or more criteria relate to one or more out of:
- a transmission capability of the first wireless device (120);
- whether or not the first wireless device (120) is operating in a Carrier Aggregation, CA, transmission mode;
- a requirement of a service to be provided to the second wireless device (122);
- a value of a Reference Signal Received Power, RSRP in relation to a threshold value;
- an identity of a service to be provided to the second wireless device (122) is associated to the one or more carriers;
- an identity of the second wireless device (122); and
- a combination of carriers that may be used for a certain service.

9. The first wireless device (120) of any one of claims 6-8, further being preconfigured with one or more carriers that may be used for transmitting synchronization signals to the second wireless device (122).

10. A network node (110) for controlling a first wireless device (120) to transmit a synchronization signal to a second wireless device (122), wherein the network node (110), and the first and second wireless devices (120,122) are configured to operate in a wireless communications network (100), and wherein the network node (110) is configured to:
- transmit, to the first wireless device (120), a message indicating whether or not a carrier is to be used for transmitting a synchronization signal to the second wireless device (122) ; where in the message further indicates whether or not multiple carriers out of aggregated carriers are to be used by the first wireless device (120) for transmitting synchronization signals to the second wireless device (122).

11. A computer program, comprising instructions which, when executed on at least one processor, causes the at least one processor to carry out the method according to any one of claims 1-5.

12. A carrier comprising the computer program of claim 11, wherein the carrier is one of an electronic signal, an optical signal, a radio signal, or a computer readable storage medium.

## Patentansprüche

1. Verfahren, das von einer ersten Drahtlosvorrichtung (120) durchgeführt wird, zum Senden eines Synchronisationssignals an eine zweite Drahtlosvorrichtung (122), wobei die erste und die zweite Drahtlosvorrichtung (120, 122) in einem Drahtloskommunikationsnetzwerk (100) operieren, und wobei das Verfahren umfasst:
- Empfangen (301) einer Nachricht, die angibt, ob ein Träger zum Senden eines Synchronisationssignals an die zweite Drahtlosvorrichtung (122) zu verwenden ist oder nicht, von einem Netzwerkknoten (110), der im Drahtloskommunikationsnetzwerk (100) operiert; wobei die Nachricht ferner angibt, ob mehrere Träger aus aggregierten Trägern zum Senden von Synchronisationssignalen an die zweite Drahtlosvorrichtung (122) zu verwenden sind oder nicht; und
- Senden (303) eines Synchronisationssignals auf einem durch die empfangene Nachricht angegebenen Träger an die zweite Drahtlosvorrichtung (122).

2. Verfahren nach Anspruch 1, wobei das Empfangen (301) der Nachricht ferner umfasst:
- Bestimmen (302), ob ein oder mehrere Kriterien zur Übertragung von Synchronisationssignalen erfüllt werden oder nicht; und wobei das Senden (303) des Synchronisationssignals auf dem durch die empfangene Nachricht angegebenen Träger umfasst:
- Senden der Synchronisationssignale auf einem oder mehreren Trägern aus den aggregierten Trägern, in welchen das eine oder die mehreren Kriterien erfüllt werden.

3. Verfahren nach Anspruch 2, wobei das eine oder die mehreren Kriterien eines oder mehreres von Folgendem betreffen:
- eine Übertragungsfähigkeit der ersten Drahtlosvorrichtung (120);
- ob die erste Drahtlosvorrichtung (120) in einem Trägeraggregations-,CA-,Übertragungsmodus funktioniert oder nicht;
- eine Anforderung eines für die zweite Drahtlosvorrichtung (122) bereitzustellenden Dienstes;
- einen Wert einer Referenzsignalempfangsleistung, RSRP, in Bezug auf einen Schwellenwert;
- eine Identität eines für die zweite Drahtlosvorrichtung (122) bereitzustellenden Dienstes ist mit dem einen oder den mehreren Trägern assoziiert;
- eine Identität der zweiten Drahtlosvorrichtung (122); und
- eine Kombination von Trägern, die für einen bestimmten Dienst verwendet werden kann.

4. Verfahren nach einem der Ansprüche 1 bis 3, wobei die erste Drahtlosvorrichtung (120) mit einem oder mehreren Trägern vorkonfiguriert ist, die zum Senden von Synchronisationssignalen an die zweite Drahtlosvorrichtung (122) verwendet werden können.

5. Verfahren, das von einem Netzwerkknoten (110) durchgeführt wird, zum Steuern einer ersten Drahtlosvorrichtung (120) zum Senden eines Synchronisationssignals an eine zweite Drahtlosvorrichtung (122), wobei der Netzwerkknoten (110) und die erste und die zweite Drahtlosvorrichtung (120, 122) in einem Drahtloskommunikationsnetzwerk (100) operieren, und wobei das Verfahren umfasst:
- Senden (501) einer Nachricht, die angibt, ob ein Träger zum Senden eines Synchronisationssignals an die zweite Drahtlosvorrichtung (122) zu verwenden ist oder nicht, an die erste Drahtlosvorrichtung (120); wobei die Nachricht ferner angibt, ob mehrere Träger aus aggregierten Trägern durch die erste Drahtlosvorrichtung (120) zum Senden von Synchronisationssignalen an die zweite Drahtlosvorrichtung (122) zu verwenden sind oder nicht.

6. Erste Drahtlosvorrichtung (120) zum Senden eines Synchronisationssignals an eine zweite Drahtlosvorrichtung (122), wobei die erste und die zweite Drahtlosvorrichtung (120, 122) zum Betrieb in einem Drahtloskommunikationsnetzwerk (100) konfiguriert sind, und wobei die erste Drahtlosvorrichtung (120) konfiguriert ist zum:
- Empfangen einer Nachricht, die angibt, ob ein Träger zum Senden eines Synchronisationssignals an die zweite Drahtlosvorrichtung (122) zu verwenden ist oder nicht, von einem Netzwerkknoten (110), der im Drahtloskommunikationsnetzwerk (100) operiert;
wobei die Nachricht ferner angibt, ob mehrere Träger aus aggregierten Trägern durch die erste Drahtlosvorrichtung (120) zum Senden von Synchronisationssignalen an die zweite Drahtlosvorrichtung (122) zu verwenden sind oder nicht; und
Senden eines Synchronisationssignals auf einem durch die empfangene Nachricht angegebenen Träger an die zweite Drahtlosvorrichtung (122).

7. Erste Drahtlosvorrichtung (120) nach Anspruch 6, die ferner konfiguriert ist zum:
- Bestimmen, ob ein oder mehrere Kriterien zur Übertragung von Synchronisationssignalen erfüllt werden oder nicht; und
- Senden der Synchronisationssignale auf einem oder mehreren Trägern aus den aggregierten Trägern, in welchen das eine oder die mehreren Kriterien erfüllt werden.

8. Erste Drahtlosvorrichtung (120) nach Anspruch 7, wobei das eine oder die mehreren Kriterien eines oder mehreres von Folgendem betreffen:
- eine Übertragungsfähigkeit der ersten Drahtlosvorrichtung (120);
- ob die erste Drahtlosvorrichtung (120) in einem Trägeraggregations-,CA-,Übertragungsmodus funktioniert oder nicht;
- eine Anforderung eines für die zweite Drahtlosvorrichtung (122) bereitzustellenden Dienstes;
- einen Wert einer Referenzsignalempfangsleistung, RSRP, in Bezug auf einen Schwellenwert;
- eine Identität eines für die zweite Drahtlosvorrichtung (122) bereitzustellenden Dienstes ist mit dem einen oder den mehreren Trägern assoziiert;
- eine Identität der zweiten Drahtlosvorrichtung (122); und
- eine Kombination von Trägern, die für einen bestimmten Dienst verwendet werden kann.

9. Erste Drahtlosvorrichtung (120) nach einem der Ansprüche 6 bis 8, die ferner mit einem oder mehreren Trägern vorkonfiguriert ist, die zum Senden von Synchronisationssignalen an die zweite Drahtlosvorrichtung (122) verwendet werden können.

10. Netzwerkknoten (110) zum Steuern einer ersten Drahtlosvorrichtung (120) zum Senden eines Synchronisationssignals an eine zweite Drahtlosvorrichtung (122), wobei der Netzwerkknoten (110) und die erste und die zweite Drahtlosvorrichtung (120, 122) zum Betrieb in einem Drahtloskommunikationsnetzwerk (100) konfiguriert sind, und wobei der Netzwerkknoten (110) konfiguriert ist zum:
- Senden einer Nachricht, die angibt, ob ein Träger zum Senden eines Synchronisationssignals an die zweite Drahtlosvorrichtung (122) zu verwenden ist oder nicht, an die erste Drahtlosvorrichtung (120); wobei die Nachricht ferner angibt, ob mehrere Träger aus aggregierten Trägern durch die erste Drahtlosvorrichtung (120) zum Senden von Synchronisationssignalen an die zweite Drahtlosvorrichtung (122) zu verwenden sind oder nicht.

11. Computerprogramm, umfassend Anweisungen, die bei Ausführung auf mindestens einem Prozessor den mindestens einen Prozessor zum Durchführen des Verfahrens nach einem der Ansprüche 1 bis 5 veranlassen.

12. Datenträger, umfassend das Computerprogramm nach Anspruch 11, wobei der Datenträger eines von einem elektronischen Signal, einem optischen Signal, einem Funksignal oder einem computerlesbaren Speichermedium ist.

## Revendications

1. Procédé réalisé par un premier dispositif sans fil (120) pour transmettre un signal de synchronisation à un deuxième dispositif sans fil (122), dans lequel les premier et deuxième dispositifs sans fil (120, 122) fonctionnent dans un réseau de communication sans fil (100), et dans lequel le procédé comprend :
- la réception (301), depuis un noeud de réseau (110) fonctionnant dans le réseau de communication sans fil (100), d'un message indiquant si une porteuse doit ou non être utilisée pour transmettre un signal de synchronisation au deuxième dispositif sans fil (122) ; dans lequel le message indique en outre si plusieurs porteuses parmi des porteuses agrégées doivent ou non être utilisées pour transmettre des signaux de synchronisation au deuxième dispositif sans fil (122) ; et
- la transmission (303), au deuxième dispositif sans fil (122), d'un signal de synchronisation sur une porteuse indiquée par le message reçu.

2. Procédé selon la revendication 1, dans lequel la réception (301) du message comprend en outre :
- la détermination (302) si un ou plusieurs critères de transmission de signaux de synchronisation sont ou non satisfaits ; et dans lequel la transmission (303) du signal de synchronisation sur la porteuse indiquée par le message reçu comprend :
- la transmission des signaux de synchronisation sur une ou plusieurs porteuses parmi les porteuses agrégées dans lesquelles les un ou plusieurs critères sont satisfaits.

3. Procédé selon la revendication 2, dans lequel les un ou plusieurs critères sont relatifs à un ou plusieurs parmi :
- une capacité de transmission du premier dispositif sans fil (120) ;
- si le premier dispositif sans fil (120) fonctionne ou non dans un mode de transmission à agrégation de porteuses, CA ;
- une exigence d'un service à fournir au deuxième dispositif sans fil (122) ;
- une valeur d'une puissance reçue de signal de référence, RSRP, par rapport à une valeur de seuil ;
- une identité d'un service à fournir au deuxième dispositif sans fil (122) est associée aux une ou plusieurs porteuses ;
- une identité du deuxième dispositif sans fil (122) ; et
- une combinaison de porteuses qui peuvent être utilisées pour un certain service.

4. Procédé selon l'une quelconque des revendications 1 à 3, dans lequel le premier dispositif sans fil (120) est préalablement configuré avec une ou plusieurs porteuses qui peuvent être utilisées pour transmettre des signaux de synchronisation au deuxième dispositif sans fil (122) .

5. Procédé réalisé par un noeud de réseau (110) pour commander un premier dispositif sans fil (120) pour transmettre un signal de synchronisation à un deuxième dispositif sans fil (122), dans lequel le noeud de réseau (110) et les premier et deuxième dispositifs sans fil (120, 122) fonctionnent dans un réseau de communication sans fil (100), et dans lequel le procédé comprend :
- la transmission (501), au premier dispositif sans fil (120), d'un message indiquant si une porteuse doit ou non être utilisée pour transmettre un signal de synchronisation au deuxième dispositif sans fil (122) ; dans lequel le message indique en outre si plusieurs porteuses parmi des porteuses agrégées doivent ou non être utilisées par le premier dispositif sans fil (120) pour transmettre des signaux de synchronisation au deuxième dispositif sans fil (122).

6. Premier dispositif sans fil (120) pour transmettre un signal de synchronisation à un deuxième dispositif sans fil (122), dans lequel les premier et deuxième dispositifs sans fil (120, 122) sont configurés pour fonctionner dans un réseau de communication sans fil (100), et dans lequel le premier dispositif sans fil (120) est configuré pour :
- recevoir, depuis un noeud de réseau (110) fonctionnant dans le réseau de communication sans fil (100), un message indiquant si une porteuse doit ou non être utilisée pour transmettre un signal de synchronisation au deuxième dispositif sans fil (122), dans lequel le message indique en outre si plusieurs porteuses parmi des porteuses agrégées doivent ou non être utilisées par le premier dispositif sans fil (120) pour transmettre des signaux de synchronisation au deuxième dispositif sans fil (122) ; et
- transmettre, au deuxième dispositif sans fil (122), un signal de synchronisation sur une porteuse indiquée par le message reçu.

7. Premier dispositif sans fil (120) selon la revendication 6, étant en outre configuré pour :
- déterminer si un ou plusieurs critères de transmission de signaux de synchronisation sont ou non satisfaits ; et
- transmettre les signaux de synchronisation sur une ou plusieurs porteuses parmi les porteuses agrégées dans lesquelles les un ou plusieurs critères sont satisfaits.

8. Premier dispositif sans fil (120) selon la revendication 7, dans lequel les un ou plusieurs critères sont relatifs à un ou plusieurs parmi :
- une capacité de transmission du premier dispositif sans fil (120) ;
- si le premier dispositif sans fil (120) fonctionne ou non dans un mode de transmission à agrégation de porteuses, CA ;
- une exigence d'un service à fournir au deuxième dispositif sans fil (122) ;
- une valeur d'une puissance reçue de signal de référence, RSRP, par rapport à une valeur de seuil ;
- une identité d'un service à fournir au deuxième dispositif sans fil (122) est associée aux une ou plusieurs porteuses ;
- une identité du deuxième dispositif sans fil (122) ; et
- une combinaison de porteuses qui peuvent être utilisées pour un certain service.

9. Premier dispositif sans fil (120) selon l'une quelconque des revendications 6 à 8, étant en outre préalablement configuré avec une ou plusieurs porteuses qui peuvent être utilisées pour transmettre des signaux de synchronisation au deuxième dispositif sans fil (122) .

10. Noeud de réseau (110) pour commander un premier dispositif sans fil (120) pour transmettre un signal de synchronisation à un deuxième dispositif sans fil (122), dans lequel le noeud de réseau (110) et les premier et deuxième dispositifs sans fil (120, 122) sont configurés pour fonctionner dans un réseau de communication sans fil (100), et dans lequel le noeud de réseau (110) est configuré pour :
- transmettre, au premier dispositif sans fil (120), un message indiquant si une porteuse doit ou non être utilisée pour transmettre un signal de synchronisation au deuxième dispositif sans fil (122) ; dans lequel le message indique en outre si plusieurs porteuses parmi des porteuses agrégées doivent ou non être utilisées par le premier dispositif sans fil (120) pour transmettre des signaux de synchronisation au deuxième dispositif sans fil (122).

11. Programme informatique comprenant des instructions qui, lorsqu'elles sont exécutées sur au moins un processeur, amènent l'au moins un processeur à réaliser le procédé selon l'une quelconque des revendications 1 à 5.

12. Support comprenant le programme informatique selon la revendication 11, dans lequel le support est l'un parmi un signal électronique, un signal optique, un signal radio et un support de stockage lisible par ordinateur.
